# EUROPÄISCHE PATENTANMELDUNG

(11) **EP 1 333 651 A2**
(43) Veröffentlichungstag der Anmeldung: **06.08.2003**
(21) Anmeldenummer: 03002235.4
(22) Anmeldetag: 31.01.2003
(51) Int. Cl.: H04M 3/428, H04M 7/00

(54) **Vorrichtung und Verfahren zur Einspielung von Audiodaten in eine Telefonverbindung**

(30) Priorität: 01.02.2002 DE 10204007
(71) Anmelder: Tenovis GmbH & Co. KG, 60326 Frankfurt (DE)
(72) Erfinder: Grob, Stefanie, 65795 Hattersheim (DE); Meub, Roland, 63691 Ranstadt (DE)
(74) Vertreter: Heinze, Ekkehard, Dipl.-Phys. Dr.

(57) **Zusammenfassung**

Die Erfindung betrifft eine Vorrichtung zur Einspielung von Audiodaten in eine auf Internetprotokollen basierende Telefonverbindung (4;5) zwischen einem als Vermittlungsanlage funktionierenden MOH-Service-Provider (1) und mindestens einem Endgerät (2;3) mindestens eines wartenden Teilnehmers, wobei der MOH-Service-Provider (1) in einem auf IP-Telephonie-Standard basierenden Kommunikationsnetz angeordnet ist, wobei die Vorrichtung weiterhin einen mit dem MOH-Service-Provider (1) verbundenen MOH-Server (6) zum Einspielen der Audiodaten in die Telefonverbindung (4;5) beinhaltet.

## Beschreibung

Die Erfindung betrifft eine Vorrichtung und ein Verfahren zur Einspielung von Audiodaten in eine auf Internetprotokollen basierende Telefonverbindung zwischen einem als Vermittlungsanlage funktionierenden MOH-Service-Provider und mindestens einem Endgerät mindestens eines Teilnehmers gemäß den Oberbegriffen der Patentansprüche 1 und 8, wobei der Teilnehmer auf die Weiterführung oder den Aufbau eines Telefongesprächs wartet.

In auf Internetprotokollen basierenden Telefonverbindungen, die auf dem Voice over IP-Prinzip basieren, werden Endgeräte (Voice-Clients) über ein auf Internet-Protokollen basierendes Kommunikationsnetz miteinander verbunden. Als Vermittlungsstelle für die Weiterleitung oder Umleitung eines ankommenden Telefongespräches dienen in der Regel Gatekeeper, deren Funktionsweise auf dem H.323-Standard der ITU für paketvermittelnde Netze basiert.

Basiert das paketvermittelnde Netz jedoch auf dem Session Initiation Protocol (SIP), definiert durch den SIP-Standard der IETF, wird die Funktion der Vermittlungsstelle von einem SIP-Server übernommen. Das Verfahren ist also nicht an das Protokoll gebunden.

Bei beiden obengenannten Standards wird das aus dem Internet bekannte Übertragungsprotokoll RTP (Real Time Protocol) genutzt, welches Echtzeitanwendungen in auf Internet-Protokollen basierenden Kommunikationsnetzen unterstützt. Grundprinzip des RTP ist die Nutzung einer Fehlerüberwachung während der Übertragung, die sich Forward Error Control nennt. Ein derartiges Forward Error Control wird durch einen erweiterten Header ermöglicht, in dem Zusatzinformationen, wie beispielsweise die Art der übertragenen Nutzdaten (Sprache, Video, etc.) oder der Zeitpunkt der Erzeugung der Daten, stehen. Die Verwendung eines derartigen Headers ermöglicht es, daß die zu übertragenden Daten einfacher in eine bestimmte, korrekte Reihenfolge gebracht werden können.

Das Übertragungsprotokoll RTP verwendet verschiedene Codecs, wie beispielsweise G.711, G.722, G.728, G.723.1 und G.729. Derartige Codecs stellen Bausteine dar, welche die Funktion eines Coders und eines Decoders in sich vereinen, um so bei der Übertragung von Daten zwischen zwei Punkten durch einen gemeinsamen Baustein sowohl codieren als auch decodieren zu können. Dies ist vorteilhaft, wenn zwischen den Punkten, wie beispielsweise zwei Endgeräten, Daten in beide Richtungen übertragen werden.

Bei Telefonverbindungen, die auf dem Voice over IP (VoIP)-Prinzip basieren, ist es ebenso wie bei leitungsvermittelten Telefonverbindungen möglich, das Leistungsmerkmal Call Waiting (Zweitanruf) in Anspruch zu nehmen, um bei einer Vermittlungsanlage anrufende Endgeräte auf eine Warteschleife zu schicken, in welcher der auf das Telefongespräch wartende Teilnehmer des anrufenden Endgerätes eine Melodie hört.

Mit dem Leistungsmerkmal Music-On-Hold ist es auch während eines Gesprächs möglich, seinen Gesprächspartner zeitweilig in die Warteschleife zu schicken, um z.B. eine Rückfrage zu tätigen.

In der Regel sind derartige Melodien entweder in der Vermittlungsanlage fest eingespeichert, oder sie werden von einem an die Vermittlungsanlage angeschlossenen CD-Player oder Kassettenrecorder eingespielt. Bekannt ist auch die Einspielung von gesprochenen und im Laufe der Zeit veränderbaren Produktinformationen, Öffnungszeiten oder anderen individuellen und auf das das Leistungsmerkmal nutzende Unternehmen zugeschnittenen Ansagen, wobei dies von der Speicherkapazität der Vermittlungsanlage abhängig ist.

Derartige vermittlungsanlageninterne Abspeicherungen von Musikstücken oder eine derartige Einspielung von Musikstücken mittels eines CD-Players oder eines Kassettenrecorders haben zur Folge, daß nur auf ein begrenztes Musikangebot bzw. Angebot an Ansagetexten zugegriffen werden kann. Zudem ist es im Fall der Verwendung eines CD-Players oder eines Kassettenrecorders notwendig, die CD bzw. die Kassette zu wechseln, um einen Wechsel bei der eingespielten Musik bzw. des Ansagetextes zu erreichen.

Weiterhin ermöglichen derartige herkömmliche Einspielungsvorrichtungen und -verfahren nicht eine Einflußnahme des das Endgerät benutzenden Teilnehmers auf den Einspielvorgang, so daß der Teilnehmer gezwungen ist, sich die eingespielte Musik bzw. Textansage anzuhören, während er in der Warteschleife auf die Entgegennahme seines Telefongespräches wartet.

Demzufolge liegt der vorliegenden Erfindung die Aufgabe zugrunde, eine Vorrichtung und ein Verfahren zur Einspielung von Audiodaten in eine auf Internetprotokollen basierende Telefonverbindung zur Verfügung zu stellen, die auf schnelle und einfache Weise das Zur-Verfügung-Stellen verschiedener Musikstücke und/oder Textansagen ermöglichen.

Diese Aufgabe wird vorrichtungsseitig gemäß den Merkmalen des Patentanspruches 1 und verfahrensseitig gemäß den Merkmalen des Patentanspruches 8 gelöst.

Ein wesentlicher Punkt der Erfindung besteht darin, daß in einer Vorrichtung und einem Verfahren zur Einspielung von Audiodaten in eine Telefonverbindung, die auf VoIP-Prinzip basiert, zwischen einem MOH-Service-Provider, wie ein Gatekeeper, und einem Endgerät ein MOH-Server, wie ein MP3-Player, dazu verwendet wird, digitale Audiodaten einer beliebigen Datenquelle, z.B. einer lokalen Datei oder eines Medien-Stroms aus dem Internetradio, in das RTP-Format umzucodieren, um diese in Abhängigkeit von einer Steuerung durch den MOH-Service-Provider und/oder den Clients (Endgeräte) an die Clients zu übertragen. Hierbei werden vom MOH-Server die Audiodaten in unterschiedlich codierten RTP-Strömen zur Verfügung gestellt - da jeder Client die RTP-Ströme nur in einem bestimmten RTP-Format bzw. Codec empfängt. Auf diese Weise können jedem Client, unabhängig davon, in welchem Codec die Daten übertragen werden, die Daten schnell und einfach zur Verfügung gestellt werden. Denn durch den Zugriff beispielsweise auf das durch das Internetradio zur Verfügung gestellte Musikangebot mittels des MOH-Servers ist mittels entsprechender Softwaresteuerung durch den MOH-Service-Provider bzw. die Clients eine Auswahl aus einer großen Menge von Musikstücken möglich, wobei die Musikstücke aufgrund der digitalen Komprimierung (z.B. gemäß dem MP3-Verfahren) ein Qualitätsniveau erhalten, das einer CD-Aufnahme gleichkommt.

Der MOH-Service-Provider steuert dabei die Auswahl der Audiodaten, z.B. Musik, Auswahl des Internetradio-Kanals, Werbetext, usw. Sofern Audiodaten in Form von Textansagen dazu verwendet werden, den Teilnehmer während seines Wartens auf ein Telefongespräch mit Informationen zu versorgen, können dies Produktinformationen oder Öffnungszeiten des Unternehmens, auf dessen Vermittlungsanlage zugegriffen wird, sein.

Vorteilhafterweise kann der Client, der mit derartigen Textansagen versorgt wird, diese Textansagen von sich aus unterbrechen, beenden, wiederholen oder neu starten, so daß dem Teilnehmer des Endgerätes (Client) ermöglicht wird, beispielsweise die eingespielte Textansage wieder auszublenden, wenn sie ihn während seines Wartens stört. Denkbar ist auch, daß der Teilnehmer eine zweiseitige Kommunikation mit einem Textansagedienst durchführt, um beispielsweise Bestellungen für Produkte aus dem angesagten Produktangebot aufzugeben.

Bei dem Verbindungsaufbau zwischen dem MOH-Server und dem Client sind zwei Ausführungsformen denkbar. Eine erste Ausführungsform basiert auf dem direkten Versenden der RTP-Ströme mit dem Multicasting-Verfahren zu den Clients, für die der jeweilige Strom bestimmt ist. Auf diese Weise überträgt der MOH-Server durch Umgehung des MOH-Service-Providers (Vermittlungsstelle) die Audiodaten direkt an jeden Client, der sich momentan in einer Warteschleife befindet.

Alternativ können gemäß einer zweiten Ausführungsform die Audiodaten von dem MOH-Server indirekt über den MOH-Service-Provider zu jedem Client geschickt werden, wobei die Verbindung zwischen dem MOH-Server und dem MOH-Service-Provider eine Punkt-Punkt-Verbindung (Unicast-Prinzip) darstellt.

Über eine zwischen dem MOH-Service-Provider und dem MOH-Server angeordnete Schnittstelle können der MOH-Service-Provider und indirekt auch die Clients auf die Steuerungsdaten des MOH-Servers zur Steuerung der Einspielung der Audiodaten zugreifen.

Weitere vorteilhafte Ausführungsformen ergeben sich aus den Unteransprüchen.

Zusätzliche Vorteile und Zweckmäßigkeiten sind der nachfolgenden Beschreibung in Verbindung mit der Zeichnung zu entnehmen. Hierbei zeigen:
- Fig.1: eine schematische Darstellung der erfindungsgemäßen Vorrichtung gemäß einer ersten Ausführungsform der Erfindung und
- Fig.2: eine schematische Darstellung der erfindungsgemäßen Vorrichtung gemäß einer zweiten Ausführungsform der Erfindung.

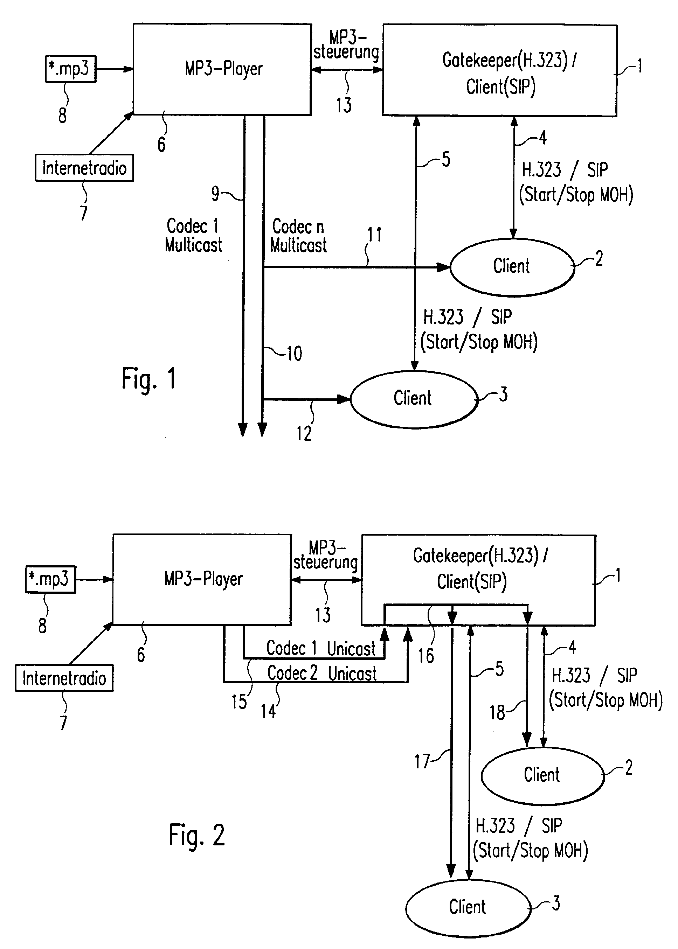

In Fig.1, die eine erfindungsgemäße Vorrichtung gemäß einer ersten Ausführungsform darstellt, wird ein Gatekeeper (MOH-Service-Provider) 1 gezeigt, der mit zwei Clients 2 und 3 über die Verbindungsleitungen 4 und 5 verbunden ist. Der über die Verbindungsleitungen 4 und 5 stattfindende Datenaustausch findet in einem auf H.323-Standard basierenden Kommunikationsnetz oder dem Signalisierungsprotokoll Session Initiation Protocol (SIP) statt.

Die Clients 2 und 3 durchlaufen vermittlungstechnisch ein Wartefeld mittels der Aktivierung eines Leistungsmerkmales Hold oder Call Waiting. Die Clients rufen bei dem Leistungsmerkmal Call Waiting in dem paketvermittelnden Kommunikationsnetz gemäß dem VoIP-Prinzip einen weiteren Client über den Gatekeeper 1, der als Vermittlungsstelle dient, an. Der Gatekeeper 1 erkennt, daß der weitere Client sich momentan im Besetzt-Zustand befindet und läßt diesen Besetzt-Zustand mittels einer Textansage mitteilen. Anschließend soll ein Musikstück in die Telefonverbindung zwischen dem Client und dem Gatekeeper eingespielt werden, um die Wartezeit besser zu überbrücken. Für die Einspielung eines derartigen Musikstückes wird ein MP3-Player 6 durch den Gatekeeper 1 angesteuert.

Bei dem Leistungsmerkmal Hold Waiting wird ein bereits bestehendes Gespräch durch eine Pause unterbrochen, in welcher dem anrufenden Client ein Musikstück eingespielt wird.

Der MP3-Player 6 greift auf Daten mit MP3-codiertem Inhalt, z.B. (*.mp3) 8 (lokal oder aus dem Internet) zu. Er generiert aus den Musikdaten einen Medienstrom, den er über Verbindungsleitungen 9 und 10 mit verschiedenen Codecs zur Verfügung stellt, um dem empfangenden Client eine Decodierung der Musikdaten mittels eines Codierungs-Decodierungs-Bausteins in Abhängigkeit von dem Typ des Bausteins sicher zu ermöglichen.

Ein aus dem Internetradio 7 empfangener Medienstrom wird ebenfalls in verschiedene Codecs konvertiert und weitergeleitet.

Gemäß dem Multicasting-Prinzip werden über Verbindungsleitungen 11 und 12 die Musikdaten zu sämtlichen Clients 2 und 3 übertragen, die sich momentan in der Warteschleife des Gatekeepers befinden.

Jeder Client 2,3 kann von sich aus die Einspielung des Musikstückes beenden, unterbrechen oder wiederholen, indem er über die Verbindungsleitung 4 oder 5 ein entsprechendes Zugriffssignal an den Gatekeeper 1 sendet, der mittels einer hier nicht gezeigten Schnittstelle über eine Verbindungsleitung 13 auf die Steuerungsdaten des MOH-Servers, der als MP3-Player ausgebildet sein kann, zugreift. Zudem kann jeder Client eine Auswahl des von ihm gewünschten Musikstückes aus einer beispielsweise auf einer Anzeigeeinrichtung des Clients dargestellten Auflistung der abspielbaren Musikstücke auswählen.

Fig.2 zeigt die erfindungsgemäße Vorrichtung gemäß einer zweiten Ausführungsform der Erfindung. In Fig.2 werden für gleiche bzw. gleichwirkende Teile gleiche Bezugszeichen verwendet. Der Verfahrensablauf bezüglich eines Telefonverbindungsaufbaus zwischen Client 2,3 und Gatekeeper 1 über die Verbindungsleitungen 4 und 5 und dem Zugriff des MP3-Players 6 auf digitale Musikdaten 8 oder dem Internetradio 7 entspricht weitestgehend demjenigen, wie er zu Fig.1 bereits beschrieben worden ist.

Die in Fig.2 dargestellte zweite Ausführungsform unterscheidet sich von der in Fig.1 dargestellten ersten Ausführungsform dahingehend, daß die Musikdaten von dem MP3-Player 6 zu jedem Client 2,3 nicht gemäß dem Multicasting-Prinzip direkt zu jedem Client übertragen werden, sondern gemäß dem Unicasting-Prinzip über eine Punkt-Punkt-Verbindung mittels Verbindungsleitungen 14 und 15 von dem MP3-Player 6 an den Gatekeeper 1 übertragen werden. Die Verbindungsleitungen 14 und 15 unterscheiden sich dadurch voneinander, daß sie die gleichen Audiodaten mit unterschiedlichen Codecs an den Gatekeeper übertragen.

Innerhalb des Gatekeepers 1 findet eine Verteilung der einzuspielenden Audiodaten auf jeden Client 2,3, der sich momentan in einer Warteschleife befindet, über Verbindungsleitungen 16, 17,18 statt. Da beide Clients 2 und 3 den gleichen Codec-Baustein verwenden, werden die Musikdaten der Verbindungsleitung 15 und nicht die Musikdaten der Verbindungsleitung 14 an die Clients 2 und 3 weitergeleitet.

Auch bei der erfindungsgemäßen Vorrichtung gemäß der zweiten Ausführungsform ist ein Zugriff der Clients 2, 3 über die Verbindungsleitungen 4,5 und dem Gatekeeper 1 sowie der Verbindungsleitung 13 auf die Steuerungsdaten innerhalb des MP3-Players 6 möglich, um die eingespielte Musik erneut beginnen zu lassen oder vorzeitig beenden zu lassen.

An dieser Stelle sei darauf hingewiesen, daß alle oben beschriebenen Teile für sich alleine gesehen und in jeder Kombination, insbesondere die in der Zeichnung dargestellten Details als erfindungswesentlich beansprucht werden. Abänderungen hiervon sind dem Fachmann geläufig.

### Bezugszeichenliste

- 1: H.323-Gatekeeper oder SIP-Server
- 2,3: Client
- 4,5: Verbindungsleitungen zwischen Gatekeeper und Clients
- 6: MOH-Server, z.B. MP3-Player
- 7: Internetradio
- 8: digitale Daten
- 9,10,11,12: Verbindungsleitungen zwischen MP3-Player und Clients
- 13: Verbindungsleitung zwischen Gatekeeper und MP3-Player
- 14,15: Verbindungsleitungen zwischen MP3-Player und Gatekeeper zur Übertragung von Musikdaten
- 16,17,18: Verbindungsleitungen zwischen Gatekeeper und Clients zur Übertragung der Musikdaten

## Patentansprüche

1. Vorrichtung zur Einspielung von Audiodaten in eine auf Internetprotokollen basierende Telefonverbindung (4; 5) zwischen einem als Vermittlungsanlage funktionierenden MOH-Service-Provider (1) und mindestens einem Endgerät (2;3) mindestens eines auf ein Telefongespräch wartenden Teilnehmers, wobei der MOH-Service-Provider (1) in einem auf IP-Telephonie-Standard basierenden Kommunikationsnetz angeordnet ist,
**gekennzeichnet durch**
einen mit dem MOH-Service-Provider (1) verbundenen MOH-Server (6) zum Einspielen der Audiodaten in die Telefonverbindung (4;5).

2. Vorrichtung nach Anspruch 1,
**gekennzeichnet durch**
Verbindungen (10,11,12) zur direkten Übertragung der Audiodaten von dem MOH-Server (6) zu jedem Endgerät (2;3).

3. Vorrichtung nach Anspruch 1,
**gekennzeichnet durch**
Verbindungen (14,15) zwischen dem MOH-Server (6) und dem MOH-Service-Provider (1) zur Übertragung der Audiodaten von dem MOH-Server (6) über den MOH-Service-Provider (1) zu jedem Endgerät (2;3).

4. Vorrichtung nach einem der vorangegangenen Ansprüche,
**gekennzeichnet durch**
eine Schnittstelle für den Zugriff des MOH-Service-Providers (1) oder des Endgerätes (2;3) auf Steuerungsdaten des MOH-Servers zur Steuerung der Einspielung der Audiodaten.

5. Vorrichtung nach Anspruch 4,
**dadurch gekennzeichnet, daß**
mittels des Zugriffs auf die Steuerungsdaten ein Starten, Unterbrechen und/oder Beenden der Einspielung und/oder eine Musikauswahl durchführbar ist.

6. Vorrichtung nach einem der vorangegangenen Ansprüche,
**gekennzeichnet durch**
eine mit dem MOH-Server (6) verbundene Mehrzahl von Leitungen (9,10,14,15), wobei über die Leitungen die gleichen Audiodaten mit unterschiedlichen Codierungen übertragbar sind.

7. Vorrichtung nach einem der vorangegangenen Ansprüche,
**dadurch gekennzeichnet, daß**
die Audiodaten Musikdaten oder Sprachdaten sind.

8. Verfahren zur Einspielung von Audiodaten in eine auf Internetprotokollen basierende Telefonverbindung (4;5) zwischen einem als Vermittlungsanlage funktionierenden MOH-Service-Provider (1) und mindestens einem Endgerät (2;3) mindestens eines Teilnehmers, wobei der MOH-Service-Provider (1) in einem auf IP-Telephonie-Standard basierenden Kommunikationsnetz angeordnet ist und die Telefonverbindung (4;5) zwischen dem Endgerät (2;3) und dem MOH-Service-Provider (1),
**dadurch gekennzeichnet ist, daß**
die Audiodaten mittels eines mit dem MOH-Service-Providers (1) verbundenen MOH-Servers (6) in die Telefonverbindung eingespielt werden.

9. Verfahren nach Anspruch 8,
**dadurch gekennzeichnet, daß**
die Audiodaten von dem MOH-Server (6) zu jedem Endgerät (2;3) direkt übertragen werden.

10. Verfahren nach Anspruch 8,
**dadurch gekennzeichnet, daß**
die Audiodaten von dem MOH-Server (6) zu jedem Endgerät (2;3) über den MOH-Service-Provider (1) übertragen werden.

11. Verfahren nach einem der Ansprüche 8-10,
**dadurch gekennzeichnet, daß**
die Audiodaten während einer Zeitspanne, in welcher der Teilnehmer auf ein über die Telefonverbindung (4;5) stattfindendes Telefongespräch zwischen mindestens zwei Endgeräten wartet, eingespielt werden.

12. Verfahren nach einem der Ansprüche 8-10,
**dadurch gekennzeichnet, daß**
die Audiodaten während einer Zeitspanne, in welcher der Teilnehmer auf den Aufbau eines Gespräches zu einem noch im Gespräch befindlichen Teilnehmer wartet, eingespielt werden.

13. Verfahren nach einem der Ansprüche 8-12,
**dadurch gekennzeichnet, daß**
das Endgerät (2;3) und/oder der MOH-Service-Provider (1) durch Zugriff auf Steuerungsdaten des MOH-Servers (6) mittels einer Schnittstelle die Einspielung starten, unterbrechen und/oder beenden und/oder eine Audiodatenauswahl treffen kann.
